# EUROPEAN PATENT SPECIFICATION

(11) **EP 2 690 859 B1**
(45) Date of publication and mention of the grant of the patent: **24.10.2018**
(21) Application number: 13162264.9
(22) Date of filing: 04.04.2013
(51) Int. Cl.: H04N 5/00, H04N 5/232, G03B 13/36

(54) **Digital photographing apparatus and method of controlling same**
Digitales Fotografiergerät und Steuerungsverfahren dafür
Appareil de photographie numérique et procédé de commande de celui-ci

(30) Priority: 25.07.2012 KR 20120081436
(43) Date of publication of application: 29.01.2014
(73) Proprietor: Samsung Electronics Co., Ltd., Gyeonggi-do 443-742 (KR)
(72) Inventor: Lee, Kun-woo, Suwon-si, (KR); Lee, Seung-han, Suwon-si (KR); Ko, Dong-min, Suwon-si (KR)
(74) Representative: Appleyard Lees IP LLP

(56) References cited:
- US-A1- 2005 195 309
- US-A1- 2008 080 846
- US-A1- 2009 022 486
- US-A1- 2010 118 154
- US-A1- 2011 280 556

## Description

### BACKGROUND

### FIELD

Disclosed herein is a digital photographing apparatus and a method of controlling the same, and more particularly, a digital photographing apparatus capable of performing an auto-focusing function and a method of controlling the digital photographing apparatus.

### DESCRIPTION OF THE RELATED ART

In general, digital photographing apparatuses process images input through an imaging device in a digital signal processing unit and compress the processed image to generate image files, and the generated image files may be stored in a memory.

In addition, images input through the imaging device or images of the image files stored in the memory may be displayed on a display device.

Such a digital photographing apparatus includes an auto-focusing (AF) algorithm for searching for a focus position while moving a focus lens within a constant range from an initial position to an infinite position when performing an AF function.

US2008/0080846 disclosing a system and a method to identify an area of the image using the gazing direction of a user and performing optical focusing for the identified area.

### SUMMARY

Various embodiments of the invention provide a digital photographing apparatus capable of improving auto-focusing (AF) accuracy and AF speed by recognizing a behavior pattern of a user from a variation calculated by an image data variation calculator or a vibration variation measured by a vibration detector in the digital photographing apparatus, and selectively changing an AF algorithm, and a method of controlling the digital photographing apparatus.

According to the present invention there is provided an apparatus and method as set forth in the appended claims. Other features of the invention will be apparent from the dependent claims, and the description which follows.

According to an embodiment of the invention, there is provided a method of controlling a digital photographing apparatus, the method including: determining whether a user of the digital photographing apparatus is about to perform an auto-focus (AF) operation by recognizing a behaviour pattern of the user; performing a preceding operation of a focus lens if it is determined that the user is about to perform the AF operation; and performing a post operation of the focus lens when a first shutter-release button input is received.

It may be determined that the user is about to perform the AF operation when an indication of a time shortly before the first shutter-release button input is received.

The method may further include calculating a deviation of image data received from an image sensor for a predetermined time period, before the determining of whether the user is about to perform the AF operation, wherein the determining of whether the AF operation is about to be performed may include determining whether the AF operation is about to be performed by using the calculated deviation of the image data.

The calculated deviation of the image data may be calculated by setting at least one or more detection regions of a certain region of the image sensor and by using image data received for a predetermined time period from the detection regions.

The image data may include at least one of brightness, color saturation, contrast, and color temperature.

When the digital photographing apparatus is turned on and the deviation of the image data calculated for the predetermined time is equal to or less than a reference value, it may be determined that the AF operation is about to be performed.

The method may further include measuring a vibration degree of the digital photographing apparatus, before the determining of whether the digital photographing apparatus is about to perform the AF operation, and it may be determined whether the AF operation is about to be performed by using the measured vibration degree.

When the digital photographing apparatus is turned on and the vibration within a predetermined reference range is measured for a predetermined time period, it may be determined that the AF operation is about to be performed.

The vibration degree may be determined as a difference between a maximum angular velocity value and a minimum angular velocity value, and the vibration degree may include a vibration degree with respect to an X-axis direction and a vibration degree with respect to a Y-axis direction.

The method may further include detecting a face of the user from an image input through an auxiliary photographing unit of the digital photographing apparatus, before the determining of whether the digital photographing apparatus is about to perform the AF operation, wherein it may be determined whether the AF operation is about to be performed based on the detected face.

It may be determined that the AF operation is about to be performed by tracing an orientation of the face detected for a predetermined time period or longer.

It may be determined whether the AF operation is about to be performed by tracing eyes of the detected face and determining a variation in the eyes.

The method may further include sensing whether the user contacts a viewfinder before the determining of whether the digital photographing apparatus is about to perform the AF operation, wherein when the user contacts the viewfinder, it may be determined that the AF operation is about to be performed.

When the digital photographing apparatus is turned on and the AF operation is about to be performed, a preceding operation for moving the focus lens a predetermined distance from an infinite location toward an opposite direction of the subject may be performed.

When the first shutter-release button input is received, a post operation for moving the focus lens from the location of the focus lens in the preceding operation toward the subject may be performed.

When the digital photographing apparatus is in a turned on state for a predetermined time and the AF operation is about to be performed, a preceding operation for moving the focus lens in back and forth directions of a current position to measure contrast values and determining a direction showing higher contrast values between the back and forth directions as a moving direction, may be performed.

When the first shutter-release button input is received, the AF operation may be performed while moving the focus lens to the direction having higher contrast value.

According to another embodiment of the invention, there is provided a digital photographing apparatus including: a lens driving unit for moving a focus lens; and a digital signal processor (DSP) controlling the lens driving unit to perform a preceding operation of the focus lens when the digital photographing apparatus is about to perform an auto-focus (AF) operation after determining whether the AF operation is about to be performed through recognition of a behavior pattern of a user, and controlling the lens driving unit to perform a post operation for moving the focus lens when a first shutter-release button input is received.

The digital photographing apparatus may further include a calculation unit for calculating a deviation of image data received from an image sensor for a predetermined time period, wherein the digital signal processor may determine whether the AF operation is about to be performed by using the deviation of the image data.

The digital photographing apparatus may further include a vibration detector for measuring a vibration degree of the digital photographing apparatus, wherein the digital signal processor may determine whether the AF operation is about to be performed by using the vibration degree.

The digital photographing apparatus may further include a face detector for detecting a face of the user from an image input through an auxiliary photographing unit, and it may be determined whether the AF operation is about to be performed based on the detected face of the user.

The digital signal processor may determine whether the AF operation is about to be performed by tracing eyes of the detected face and determining a variation in the eyes.

The digital photographing apparatus may further include a sensor for sensing whether the user contacts the viewfinder, wherein the digital signal processor may determine that the AF operation is about to be performed when the user contacts the viewfinder.

When the digital photographing apparatus is just turned on and the AF operation is about to be performed, the digital signal processor may control the lens driving unit to perform a preceding operation for moving the focus lens a predetermined distance from a first location toward an opposite direction of the subject, and when the first shutter-release button input is received, the digital signal processor may control the lens driving unit to perform a post operation for moving the focus lens from the location of the preceding operation toward the subject.

When the digital photographing apparatus is in a turned on state for a predetermined time period and the AF operation is about to be performed, the digital signal processor may control the lens driving unit to perform a preceding operation for moving the focus lens in back and forth directions of a current position to measure contrast values and determining a direction showing higher contrast values between the back and forth directions as a moving direction, and when the first shutter-release button input is received, the digital signal processor may control the lens driving unit to perform a post operation for moving the focus lens in the determined moving direction.

### BRIEF DESCRIPTION OF THE DRAWINGS

The above and other features and advantages of the invention will become more apparent by describing in detail exemplary embodiments thereof with reference to the attached drawings in which:
FIG. 1 is a block diagram of a digital photographing apparatus according to an embodiment of the invention;
FIG. 2 is a detailed illustrative side view of a lens unit shown in FIG. 1;
FIG. 3 is a combined illustrative side view diagram and a graph illustrating operation of a focus lens during an auto-focusing (AF) operation, according to an embodiment of the invention;
FIG. 4 is a combined illustrative side view diagram and a graph illustrating operation of a focus lens during an AF operation, according to another embodiment of the invention;
FIG. 5 is a block diagram showing representative elements for changing an AF algorithm according to image data deviation in a digital photographing apparatus, according to an embodiment of the invention;
FIGS. 6A and 6B are pictorial diagrams illustrating a method of calculating image data deviation;
FIGS. 7A and 7B are pictorial diagrams illustrating a method of determining whether an AF function is about to be performed by calculating image data deviation;
FIGS. 8A and 8B are graphs related to FIGS. 7A and 7B illustrating a method of determining whether an AF function is about to be performed by calculating image data deviation;
FIG. 9 is a detailed block diagram of a digital photographing apparatus showing representative elements for changing an AF algorithm according to shake sensing, according to another embodiment of the invention;
FIG. 10 is a graph showing variation of an angular velocity in the digital photographing apparatus of FIG. 1;
FIG. 11 is a detailed block diagram of a digital photographing apparatus showing representative elements for changing an AF algorithm by detecting a user's face photographed by an auxiliary camera, according to an embodiment of the invention;
FIGS. 12A and 12B are combined side view illustrations and a graph illustrating operations of a focus lens during an AF operation, according to an embodiment of the invention;
FIG. 13 is a diagram illustrating operations of a focus lens during an AF operation, according to another embodiment of the invention;
FIG. 14 is a flowchart illustrating a method of controlling a digital photographing apparatus according to an embodiment of the invention; and
FIG. 15 is a flowchart illustrating a method of performing preceding operations of the focus lens shown in FIG. 14.

### DETAILED DESCRIPTION

Various embodiments of the invention will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those of ordinary skill in the art.

It will be understood that although the terms first and second are used herein to describe various elements, these elements should not be limited by these terms. These terms are only used to distinguish one element from another element. Thus, a first element discussed below could be termed a second element, and similarly, a second element may be termed a first element without departing from the teachings of this disclosure.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. The words "mechanism" and "element" are used broadly and are not limited to mechanical or physical embodiments, but may include software routines in conjunction with processors, etc.

Hereinafter, the invention will be described in detail by explaining preferred embodiments of the invention with reference to the attached drawings. Like reference numerals in the drawings denote like elements. Expressions such as "at least one of," when preceding a list of elements, modify the entire list of elements and do not modify the individual elements of the list.

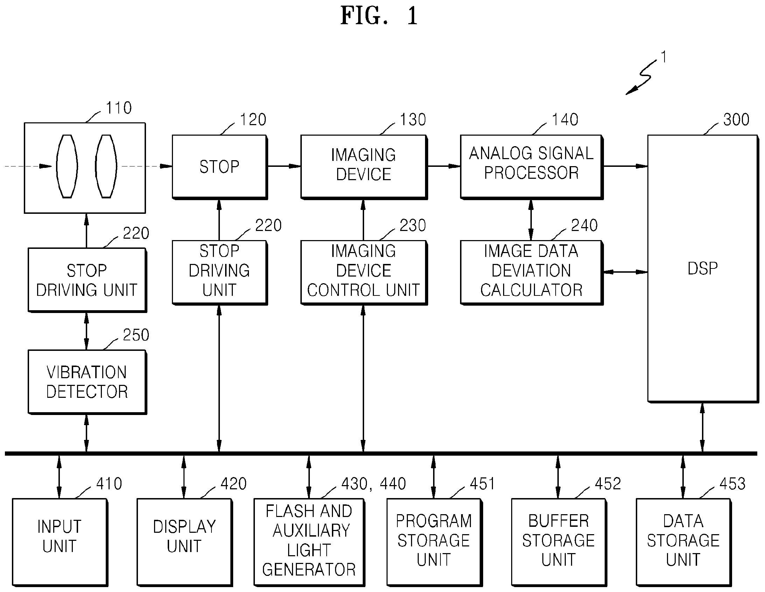

FIG. 1 is a block diagram of a digital photographing apparatus according to an embodiment of the invention, and as an example of the digital photographing apparatus, a digital camera 1 is shown. However, the digital photographing apparatus is not limited to the digital camera 1 shown in FIG. 1, and the invention may be applied to digital devices such as a compact digital camera, a single lens reflex camera, a hybrid camera that takes advantages of a compact digital camera and a single lens reflex camera, a camera phone, a smartphone, a personal digital assistant (PDA), and a portable multimedia player (PMP).

Referring to FIG. 1, the digital camera 1 includes a lens unit 110, a lens driving unit 210, a stop 120, a stop driving unit 220, an imaging device 130, an imaging device control unit 230, an analog signal processor unit 140, a digital signal processor (DSP) 300, an input unit 410, a display unit 420, a flash 430, an auxiliary light generator 440, a program storage unit 451, a buffer storage unit 452, a data storage unit 453, an image data deviation calculator 240, and a vibration detector 250.

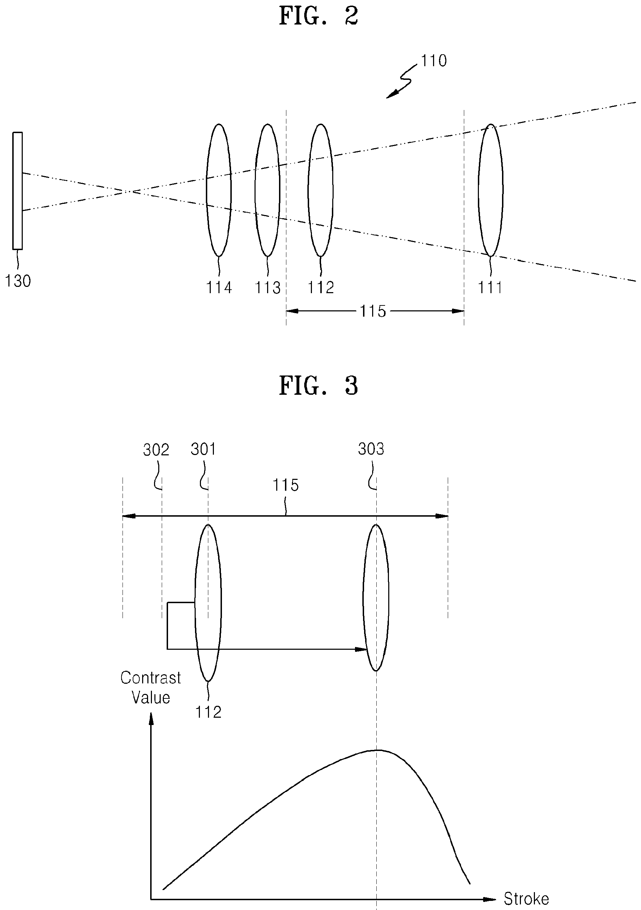

The lens unit 110 condenses optical signals. The lens unit 110 may include a zoom lens (not shown) controlling an angle of view to be decreased or increased according to a focal length, and a focus lens 112 (refer to FIG. 2) for focusing a subject. The zoom lens and the focus lens 112 may be configured to have one lens respectively; however, they may also be configured to have a group of a plurality of lenses.

The stop 120 adjusts light intensity of incident light by adjusting an opening degree thereof.

The lens driving unit 210 and the stop driving unit 220 receive control signals from the DSP 300, and drive the lens unit 110 and the stop 120, respectively. The lens driving unit 210 adjusts a focal length by adjusting a location of the focus lens 112 to perform auto-focusing (AF) operations and focus changing operations, and adjusts the location of the zoom lens to perform zooming operations. The lens driving unit 210 may include a voice coil motor (VCM), a piezo motor, or a stepping motor. For example, when the lens driving unit 210 includes the VCM, the VCM may be mounted to surround the lens unit 110 to move the lens. The lens driving unit 210 may further include a motor driver (not shown) for driving the VCM, in addition to the VCM. The stop driving unit 220 adjusts the opening degree of the stop 120, and in particular, adjusts an F number to perform operations such as the AF, automatic exposure compensation, focus changing, and depth-of-field adjustment.

An optical signal transmitted through the lens unit 110 forms an image of a subject on a light receiving surface of the imaging device 130. The imaging device 130 may be a charged coupled device (CCD), a complementary metal oxide semiconductor image sensor (CIS), or a high speed image sensor. A sensitivity of the imaging device 130 may be adjusted by the imaging device control unit 230.

The imaging device control unit 230 may control the image device 130 according to control signals that are automatically generated by image signals input in real-time, or control signals manually input by manipulation of a user. Also, the digital camera 1 may include a mechanical shutter, a blind of which moves in an up-and-down direction, as a shutter (not shown).

The analog signal processor unit 140 generates digital image signals by performing processes such as a noise reduction process, a gain adjustment process, a waveform standardization process, and an analog-digital conversion process with respect to analog signals supplied from the imaging device 130.

The image data deviation calculator 240 calculates a deviation of image data received within a predetermined time period from N-number of detection regions that are arranged at certain positions of the imaging device 130. The image data may be optical data including brightness, chroma, contrast, exposure, etc.

The input unit 410 may input the control signals from the user. Examples of the input unit 410 may include a shutter-release button that is opened/closed to expose the imaging device 130 to light for a predetermined time period, a power button for supplying electric power, a wide angle-zoom button and a telephoto-zoom button for increasing or reducing an angle of view according to an input, and various input units for selecting a mode such as a letter input mode, a photographing mode, or a play mode, selecting a function of setting a white balance, and selecting an exposure setting. Among the examples, the input through the shutter-release button may be divided into two stages, that is, a first shutter-release button input and a second shutter-release button input. When the first shutter-release button input is generated, the digital camera 1 adjusts focus to adjust light intensity. When the digital camera 1 is focused and the light intensity is adjusted, the user generates the second shutter-released button input, and accordingly, the digital camera 1 captures an image. The input unit 410 may be configured to have various key buttons; however, the invention is not limited thereto. That is, the input unit 410 may be configured as a keyboard, a touch pad, a touch screen, a remote controller, etc., through which the manipulation of the user may be input.

The display unit 420 may be a liquid crystal display (LCD), an organic light emitting display (OLED), or a field emission display (FED), and displays status information of the digital camera 1 or photographed images.

The flash 430 instantly illuminates the subject when the photographing is performed in a dark place, and may operate in an automatic flash mode, a forced flash mode, a suppressed flash mode, a red-eye prevention mode, and a slow synchro mode. The auxiliary light generator 440 supplies auxiliary light to the subject so that the digital camera 1 may automatically focus the subject accurately when there is lack of light intensity or photographing is performed at night.

In addition, the digital camera 1 includes the program storage unit 451 storing a program such as an operating system for driving the digital camera 1 or an application system, the buffer storage unit 452 that temporarily stores data required to perform the calculation or result data, and the data storage unit 453 that stores image files including image signals, and various information required by the above program.

In addition, the digital camera 1 includes the DSP 300 that processes digital image signals input from the analog signal processor 140, and controls the components according to signals input from outside. The DSP 300 may reduce noise of input image signals and may perform image signal processes for improving image quality, for example, gamma correction, color filter array interpolation, color matrix, color correction, and color enhancement. Also, the DSP 300 may generate image files by compressing image data obtained through the image signal processes for improving image quality. Otherwise, image data may be recovered from the generated image files. The compressed image files may be stored in the data storage unit 453. In addition, the DSP 300 may execute the program stored in the program storage unit 451 to generate control signals for controlling the zoom change, the focus change, and the automatic exposure correction, and provide the lens driving unit 210, the stop driving unit 220, and the imaging device control unit 230 with the generated control signals. Thus, the DSP 300 may control overall operations of the lens unit 110, the stop 120, and the imaging device 130.

According to the current embodiment of the invention, the DSP 300 may determine whether an AF operation is about to be performed by using a change in the deviation calculated by the image data deviation calculator 240.

According to another embodiment of the invention, the DSP 300 may determine whether an AF operation is about to be performed by using a degree of shaking measured by the vibration detector 250.

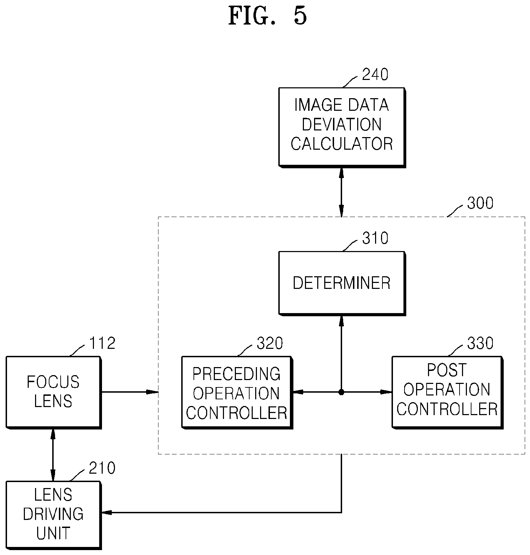

The DSP 300 controls the lens driving unit 210 to perform a preceding operation for determining a moving direction by moving the focus lens 112 when the AF operation is about to be performed, and controls the lens driving unit 210 to perform a post operation for moving the focus lens 112 in the determined moving direction when the first shutter-release button input is received. To do this, the DSP 300 may include a determiner 310, a preceding operation controller 320, and a post operation controller 330, detailed operations of which will be described with reference to FIGS. 5 through 10 below.

The vibration detector 250 is a unit including a vibration detection sensor for detecting vibration of the digital camera 1. The vibration detector 250 may include a gyro sensor (not shown). The lens driving unit 210 may be moved corresponding to a degree of vibration detected by the vibration detector 250. That is, the lens driving unit 210 may mechanically correct the vibration of image caused due to hand-shaking.

FIG. 2 is a diagram showing the lens unit 110 in detail, and the lens unit 110 includes a magnification lens 111 adjusting a magnification of the zoom lens, the focus lens 112 for focusing a subject, a lens 113 for correcting vibration, and another correcting lens 114. Ordering and configuration of the above lenses may vary depending on an optical design. The focus lens 112 may focus the subject while moving within a focus moving range 115 according to the optical design.

FIG. 3 is a diagram illustrating an operation of the focus lens 112 during an AF operation, according to an embodiment of the invention. The focus lens 112 is generally moved to an infinite focus position 301 due to the optical design, when the digital camera 1 is turned on. Here, the infinite focus position denotes a position of the focus lens 112 in a case where the subject that is located at an infinite distance (located far from the digital camera 1, rather than near the digital camera 1) is focused. In general, when a background is focused through the AF operation, the focus lens 112 may be located near the infinite focus position 301.

In the digital camera 1 capable of performing the AF operation, the AF operation performed by using the focus lens 112 when the digital camera 1 is turned on will be described as follows. In a circumstance where the focus lens 112 is located at the infinite focus position 301 in the digital camera 1 using a contrast AF, when the user tries to perform the AF, the focus lens 112 moves to a position 302 that is opposite to the subject, and after that, focuses the subject while moving within the movable range 115 in a direction toward the subject 303. The focus lens 112 is initially moved to an over infinite focus location 302 that is opposite to the subject, rather than toward the subject direction 303, in consideration of a case where a focus location of the subject is near the infinite focus position 301. If the focus lens 112 directly moves toward the subject, the subject around the infinite focus position 301 may not be focused.

Then, a moving distance (301→302, 302→301) is additionally increased, and the focus lens 112 has to additionally switch the moving direction twice, thereby increasing a time taken to perform the AF operation.

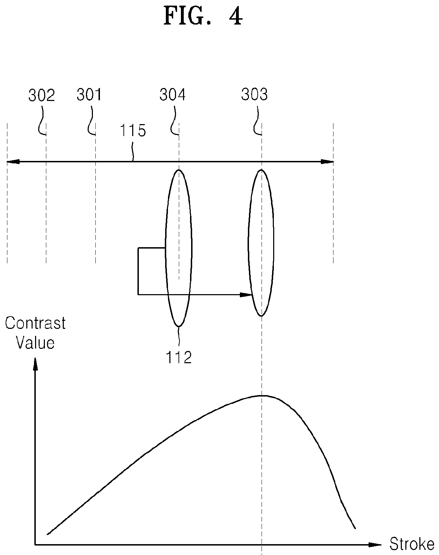

FIG. 4 is a diagram illustrating operations of the focus lens 112 in an AF operation, according to another embodiment of the invention. After a predetermined time has passed since the digital camera 1 is turned on, the focus lens 112 is located at an arbitrary point 304 within the movable range 115. In this case, when the user inputs the shutter button for performing the AF operation, the focus lens 112 is moved in back and forth directions from the current point 304 to find a position (303) showing a higher contrast value between the back and forth directions of the current point, and then, the focus lens 112 is moved to the position 303 having the higher contrast value. Thus, the additional moving distance of the focus lens 112 is increased, and the focus lens 112 has to additionally switch the moving direction, thereby increasing a time taken to perform the AF operation.

FIG. 5 is a block diagram of a digital photographing apparatus showing representative elements for changing an AF algorithm by using a deviation of image data input from the imaging device 130 of FIG. 1, according to an embodiment of the invention. Referring to FIG. 5, the digital photographing apparatus of the present embodiment includes the image data deviation calculator 240, the focus lens 112, the lens driving unit 210, and the DSP 300. Here, the DSP 300 includes the determiner 310, the preceding operation controller 320, and the post operation controller 330.

According to the current embodiment of the invention, the image data deviation calculator 240 calculates a deviation of the image data received from the imaging device 130, and outputs the calculated deviation to the DSP 300.

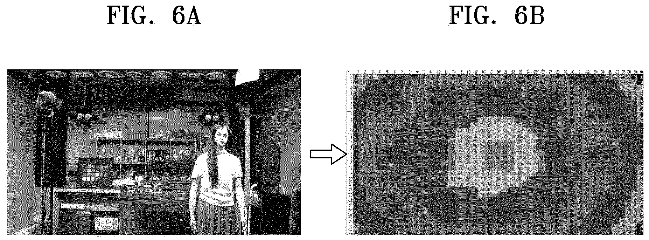

FIGS. 6A, B show a method of recognizing information of a subject as a combination of pixels arranged two-dimensionally in the imaging device 130, which is used in the method of calculating the deviation of the image data. Referring to FIGS. 6A, B, a general image sensor used in the imaging device 130 stores information about red, green, or blue color for each of pixels in the image sensor. Therefore, the imaging device 130 recognizes information of the subject shown in FIG. 6A through the combination of the pixels that are arranged two-dimensionally, and may obtain the image data in the two-dimensional arrangement as shown in FIG. 6B. That is, if the same subject is photographed twice under similar external circumferences, the image data in the same two-dimensional pixel arrangement may be obtained. Thus, the deviation of the image data may be obtained by analyzing data change in a designated region per unit time. Here, the imaging device 130 may recognize the information such as brightness, contrast, RGB data, color temperature, and exposure from the image data in the two-dimensional pixel arrangement.

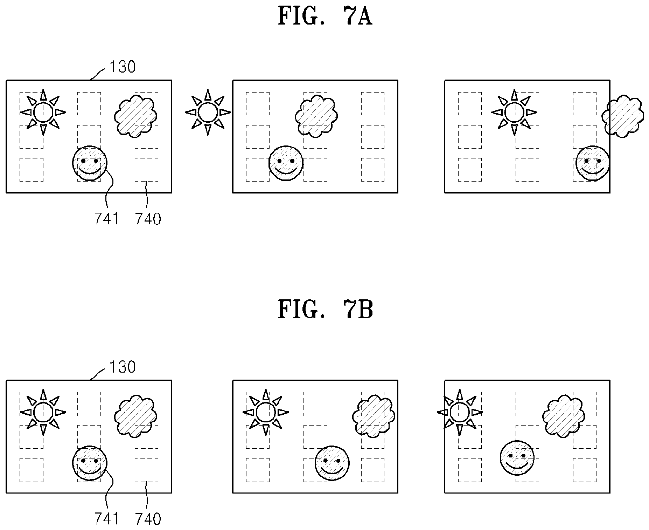

FIGS. 7A through 8B are pictorial diagrams and graphs illustrating a method of determining whether the AF operation is about to be performed by using the deviation of the image data.

Referring to FIGS. 7A and 7B, according to the embodiment of the invention, N number of detection regions 740 are arranged at constant intervals at certain locations of the imaging device 130, and after that, image data is received for a predetermined time period. When observing the image data according to circumstances, in a general situation as shown in FIG. 7A, if the user does not face the lens of the digital camera toward a subject 741, the deviation of the image data received from the detection regions 740 increases. On the other hand, if the user faces the lens toward the subject 741 in order to take a picture of the subject 741, the deviation between the image data received from the detection regions 740 for a predetermined time period is reduced. Accordingly, a behavior pattern of the user may be analyzed by using the deviation of the image data, and it may be determined that the AF operation is about to be performed.

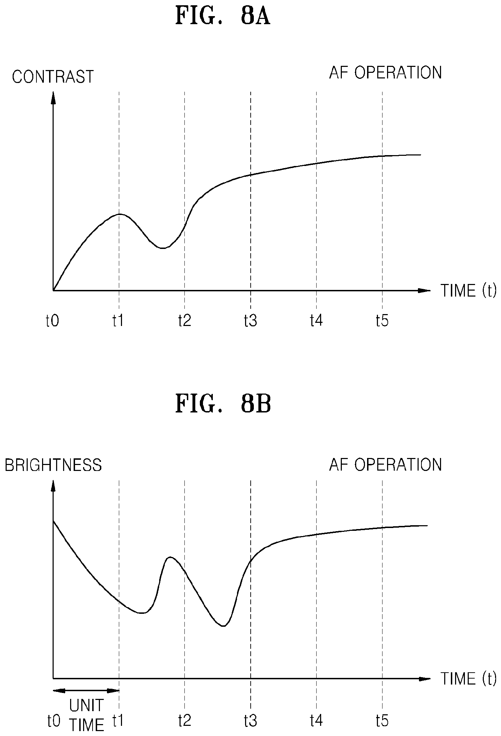

Referring to FIGS. 8A and 8B, the image data deviation calculator 240 calculates the deviation by analyzing the image data received from a certain detection region 740 for a predetermined time period (for example, the contrast shown in FIG. 8A or the brightness variation shown in FIG. 8B).

The determiner 310 compares the deviation of the image data calculated by the image data deviation calculator 240 with a reference value to determine whether the AF operation is about to be performed by the user. Here, "right before the AF operation" means right before the input of the first shutter-release button from the user. If the deviation of the image data is equal to or less than a predetermined reference for a predetermined time period (for example, between t4 and t5 of FIGS. 8A and 8B), the determiner 310 determines the point of time (for example, t5 of FIGS. 8A and 8B) as a point right before the AF operation for photographing the subject by the user.

Here, the reference value is a mark representing that the user is about to perform the AF operation. The reference value may be greater than the deviation of the image data, which is caused by internal vibration of the digital camera 1. In addition, the reference value may be set by the user, or may be programmed and stored in advance when manufacturing the digital camera 1.

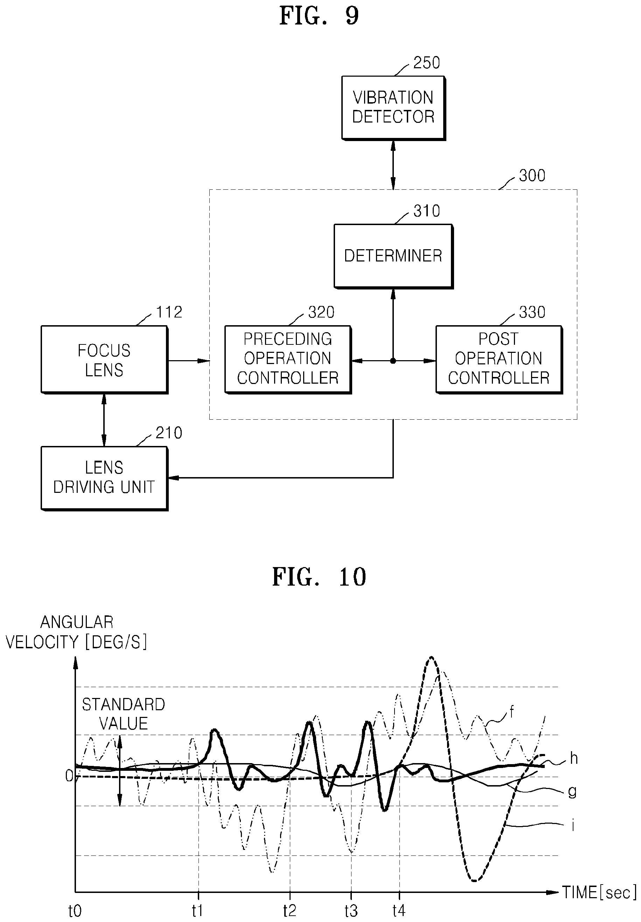

FIG. 9 is a detailed block diagram of a digital photographing apparatus showing representative elements for changing an AF algorithm by detecting vibration in FIG. 1, according to another embodiment of the invention. Referring to FIG. 9, the digital photographing apparatus includes the vibration detector 250, the focus lens 112, the lens driving unit 210, and the DSP 300. Here, the DSP 300 includes the determiner 310, the preceding operation controller 320, and the post operation controller 330.

The vibration detector 250 detects a degree of the vibration of the digital camera 1, and the vibration degree may be a value of angular velocity (ANGVEL). In addition, the vibration degree may include the vibration degree with respect to an X-axis direction and the vibration degree with respect to a Y-axis direction. That is, an X-axis angular velocity value (ANGVEL x) and a Y-axis angular velocity value (ANGVEL y) may be used. After that, the determiner 310 derives a maximum angular velocity value and a minimum angular velocity value from among the vibration degrees, and compares the maximum and minimum angular velocity values with the reference value.

FIG. 10 is a graph showing a variation in the angular velocity of the digital camera 1, wherein an X-axis denotes time and a Y-axis denotes the angular velocity value. FIG. 10 is a graph showing the angular velocity values after converting the angular velocity values into digital signals. FIG. 10 shows four graphs f through i based on the angular velocity value of 0. The graph f shows the angular velocity value when the user grips the digital camera 1. According to the graph f, the angular velocity value is maintained within the reference value range for a time period (between t0 and t1) and then, the amplitude of the angular velocity increases greatly as time elapses. The graph g shows the angular velocity value when the digital camera 1 is mounted on a tripod. The graph h shows the angular velocity value while the photographing is performed by pushing the shutter-release button in a state where the digital camera 1 is mounted on the tripod. According to the graph h, the angular velocity value is maintained within the reference value range for a time period (between t0 and t1), and then, the amplitude of the angular velocity increases greatly as time elapses. The graph i shows the angular velocity value when the user lifts the digital camera 1 mounted on the tripod.

The determiner 310 determines the vibration degree represented as the angular velocity value detected by the vibration detector 250 to determine whether the user is about to perform the AF operation. Here, the time "right before the user performs the AF operation" means right before inputting the first shutter-release button by the user. The determiner 310 extracts a maximum angular velocity value and a minimum angular velocity value from among the received vibration degrees and compares the extracted values with the reference value, and determines that the user is about to perform the AF operation when the maximum angular velocity value and the minimum angular velocity value are less than the reference value. Here, the reference value is a mark representing that the user is about to perform the AF operation. For example, the reference value represents an amount of vibration within a predetermined amplitude for a predetermined time period (for example, between t0 and t1 of FIG. 10) when the digital camera 1 is turned on and the sleep mode is not selected. The reference value may be greater than the angular velocity value, which is caused by internal vibration of the digital camera 1. Also, the reference value may be set by the user, or may be programmed in advance when manufacturing the digital camera 1.

Referring to the graph f of FIG. 10 of a case where the user grips the digital camera 1 for taking a picture and the graph h of FIG. 10 of a case where the photographing is performed by pushing the shutter-release button of the digital camera 1 mounted on the tripod, the angular velocity values are maintained within the reference value range for a time period between t0 and t1, and after that, the amplitude of the angular velocity variation is very large. Therefore, the angular velocity values experimentally generated with respect to the above cases in advance are stored in a database, and then, the received vibration degree may be compared with the database to determine whether the user is about to perform the AF operation.

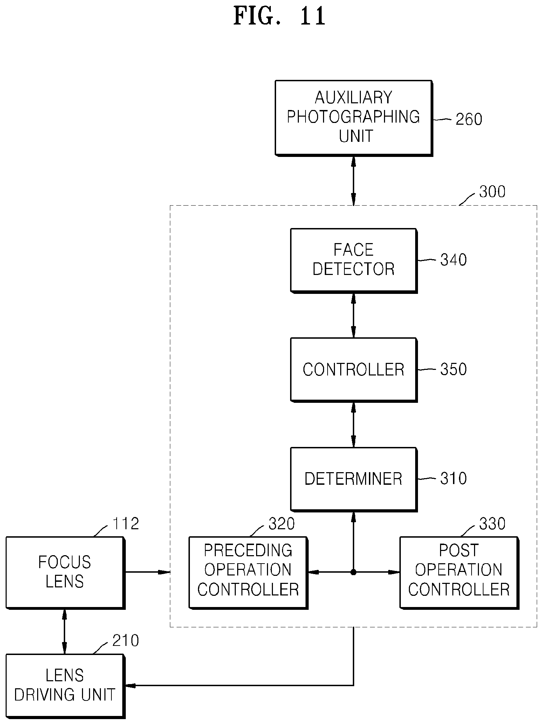

FIG. 11 is a detailed block diagram of a digital photographing apparatus showing representative elements for changing an AF algorithm by detecting user faces photographed by an auxiliary camera, according to another embodiment of the invention. Referring to FIG. 11, the digital photographing apparatus includes the auxiliary photographing unit 260, the focus lens 112, the lens driving unit 210, and the DSP 300. Here, the DSP 300 includes the determiner 310, the preceding operation controller 320, the post operation controller 330, a face detector 340, and a controller 350.

According to the current embodiment of the invention, the auxiliary photographing unit 260 may be disposed on a portion of a side surface, on which the lens unit 110 used for the main photographing operation exists, for example, may be disposed at the same side surface as that of the display unit 420 to photograph the user of the digital photographing apparatus and output auxiliary image data. In a general camera phone or smartphone, a photographing unit used in a videophone function or a self-photographing operation may be the auxiliary photographing unit 260 of the present embodiment.

For detecting face information, the face detector 340 searches for non-variable characteristics (face elements such as eyes, noise, and mouth, texture, and skin color) of a face by using a characteristic-based face detecting method. Among various characteristics of a face, skin color in particular is less sensitive to movement, rotation, and size variation of the face. Otherwise, the face detector 340 generates several standard patterns of faces, and stores the patterns for detecting the face, according to a template-based face detecting method. After that, the patterns are compared with the images one-by-one within a search window of the image to detect the face. Recently, face detection methods based on a support vector machine (SVM) has been frequently used. According to the SVM-based face detection methods, different regions are sub-sampled from the image and information about the face and non-face (portions that are not faces) is learned by using a learning machine, and then, the face is detected from the input image. The face information detection performed by the face detector 340 is well known in the art, and thus, detailed descriptions thereof are not provided here.

As described above, the face detector 340 detects face information such as the face image and the location, and outputs the face information to the controller 350.

The controller 350 detects eyes from the face image output from the face detector 340, and traces the eyes of the user from a variation in the location of the eyes. The controller 350 extracts the eyes by using an adaptive boosting (adaboost) algorithm or the SVM from the face image. In addition, the controller 350 traces the eyes of the user from the variation in the location of the eyes, and outputs a result of the tracing to the determiner 310. Here, the adaboost is a learning algorithm for extracting a template of an object, and is disclosed in detail in "A decision theoretic generalization of on-line learning and an application to boosting", In Computational Learning Theory: Eurocolt '95, pp. 23-37, Springer-Verlag, 1995, Yoav Freund and Robert E., herein incorporated by reference.

The determiner 310 determines that the user is about to perform the AF operation if the user views the display unit 420 for a predetermined time period or longer based on the received result of tracing the eyes of the user. For example, when the user performs the photographing by using the digital photographing apparatus, the user recognizes the background and the subject to be photographed with their own eyes, and after that, the user focuses and composes the subject while seeing the screen displayed on the display unit right before the photographing operation (i.e., right before the AF operation). That is, if the user views the display unit 420 of the digital photographing apparatus for a predetermined period or longer during the photographing, it is determined that the AF is about to be performed, and then, AF preceding operations that will be described later are performed. Here, the predetermined time period may be set by the user, or may be programmed and stored in the digital photographing apparatus in advance when manufacturing the digital photographing apparatus.

According to another embodiment of the invention, the face detector 340 detects face information such as the face image and location, and outputs the face information to the controller 350. The controller 350 analyzes the face pattern of the user of the photographing apparatus and traces an orientation of the face, that is, recognizes whether the detected face region is front or side of the face, and then, outputs the tracing result to the determiner 310. The determiner 310 determines that the user is viewing the display unit 420 if the orientation of the face traced for a predetermined time period or longer is front facing, and then, determines that the user is about to perform the AF operation.

According to another embodiment of the invention, if the face of the user of the digital photographing apparatus is detected for a predetermined time period or longer by the face detector 340, the determiner 310 determines that the user is viewing the display unit 420 and that the AF operation is about to be performed. Then, the AF preceding operations may be performed. Here, the controller 350 shown in FIG. 11 may be omitted.

According to another embodiment of the invention, it may be determined that the AF operation is about to be performed when the user contacts a viewfinder of the digital photographing apparatus.

As described above, when the user performs the photographing by using the digital photographing apparatus, the background and the subject to be photographed are recognized by the user's own eyes, and after that, the user focuses and composes the subject while viewing the display unit 420 right before the photographing (right before the AF operation). Therefore, in a digital photographing apparatus on which the viewfinder is mounted as the display unit 420, it may be determined that the user views the display unit 420 when the user contacts the viewfinder.

According to the current embodiment of the invention, it may be sensed that the user contacts the display unit 420 by using a physical sensor around the viewfinder or by using an infrared ray sensor, and a result of the sensing is output to the determiner 310. Here, the physical sensor may sense the contact physically, for example, a pressure sensor or a touch sensor.

The determiner 310 may determine whether the user is about to perform the AF with reference to the received sensing result. For example, when the infrared ray sensor is mounted on the viewfinder, the infrared ray sensor senses a change generated when light is blocked due to the contact of the user and outputs the change to the determiner 310, and then, the determiner 310 determines that the AF operation is about to be performed, and preceding operations that will be described later are performed.

According to the embodiments of the invention, if it is determined that the user is about to perform the AF operation as a determination result of the determiner 310, the preceding operation controller 320 and the post operation controller 330 operate sequentially to control the lens driving unit 210 and move the focus lens 112. That is, the focus lens 112 performs the preceding operations and the post operations. Here, the preceding operation is an operation for moving the focus lens 112 in order to determine the moving direction, and is performed before the first shutter-release button input is performed. The post operation is an operation for moving the focus lens 112 in the direction determined in the preceding operation, and is performed after the first shutter-release button input is received. In general, when the first shutter-release button input is received in order to focus the subject, the preceding operation and the post operation are performed together. However, in the present embodiment, when it is determined that the user is about to perform the AF operation, the preceding operation is performed first, and then, the post operation is performed after the first shutter-release button input is received, thereby reducing the processing time of the AF operation.

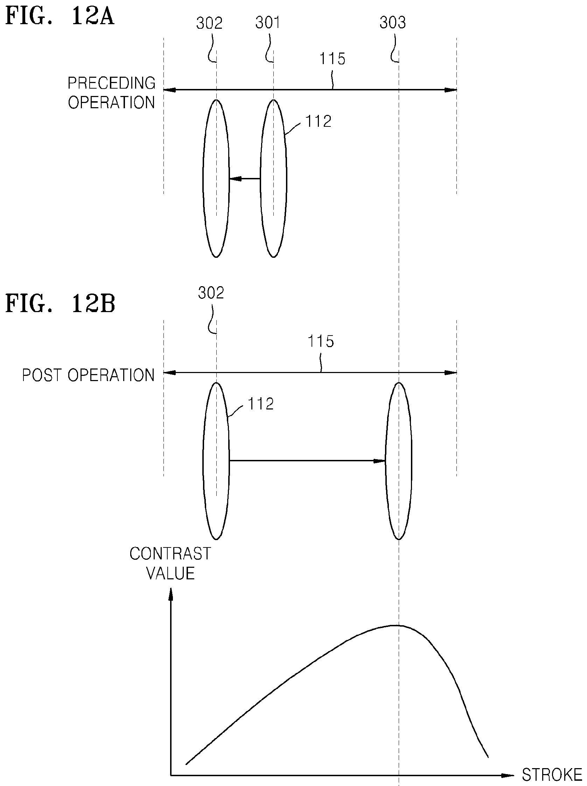

FIGS. 12A and 12B are combined side view illustrations and graph illustrating operation of the focus lens 112 during the AF operation, right after the digital camera 1 is turned on. If it is determined that the user is about to perform the AF operation as a determination result of the determiner 310, the preceding operation controller 320 outputs a control signal to the lens driving unit 210 to perform the preceding operation as shown in FIG. 12A, and the lens driving unit 210 moves the focus lens 112 according to the control signal. Here, the preceding operation is a scanning operation to search for a location where the subject is focused around the infinite position 301 by moving the focus lens 112 from the infinite position 301 to the over infinite location 302. A time taken to perform the preceding operation is very short, that is, about 33 ms, and the moving distance of the focus lens 112 is about 0.5 mm to the maximum. Thus, even when the focus lens 112 performs the preceding operation, the user may not recognize the preceding operation through the display unit 420.

After finishing the preceding operation, when the user inputs the first shutter-release button input, the post operation controller 330 outputs a control signal to the lens driving unit 210 to perform the post operation as shown in FIG. 12B, and the lens driving unit 210 moves the focus lens 112 according to the control signal. Here, the post operation is an operation for finding a focus location of the subject while moving the focus lens 112 from the over infinite location 302 at a time when the preceding operation is finished in the subject direction 303.

Through the above operation, the moving distance of the focus lens 112 while performing the AF operation (302→303) is reduced, and a waiting time according to the direction switch of the focus lens 112 may be reduced, thereby reducing the time taken to perform the AF operation.

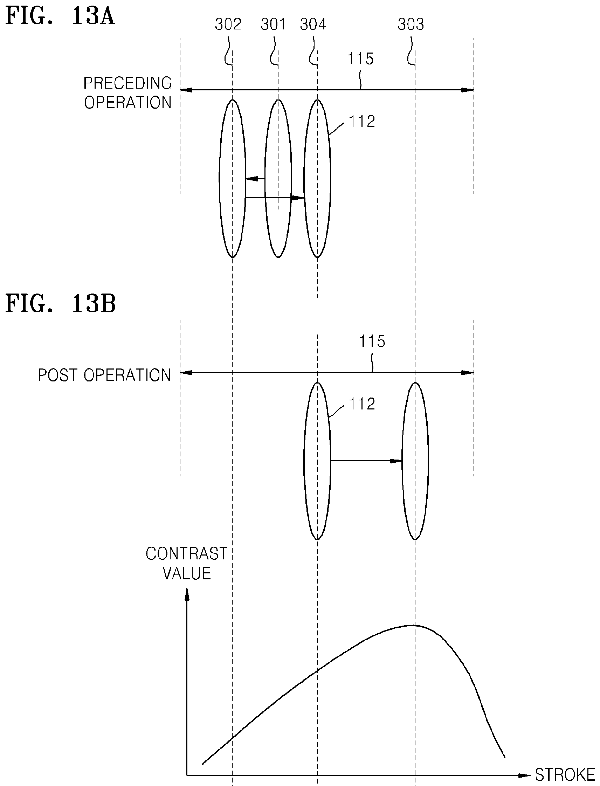

FIGS. 13A and 13B are combined side view illustrations and graph illustrating an operation of the focus lens 112 during the AF operation, when a predetermined time has elapsed after the digital camera 1 is turned on. Here, when more time has passed after the digital camera 1 is turned on as shown in FIGS. 12A, B, the state shown in FIGS. 13A, B is represented.

Likewise, as a determination result of the determiner 310, when it is determined that the user is about to perform the AF operation, the preceding operation controller 320 outputs a control signal to the lens driving unit 210 to perform the preceding operation as shown in FIG. 13A, and the lens driving unit 210 moves the focus lens 112 according to the control signal. Here, the preceding operation is an operation of moving the focus lens 112 in back and forth directions 302 and 304 from an arbitrary location 301, and determining the moving direction of the focus lens 112 toward a direction showing higher contrast value between the back and forth directions 302 and 304. The user may rarely recognize the change due to the preceding operation, through the display unit 420.

After finishing the preceding operation, when the user generates the first shutter-release button input, the post operation controller 330 outputs a control signal to the lens driving unit 210 to perform the post operation as shown in FIG. 13B, and the lens driving unit 210 moves the focus lens 112 according to the control signal. Here, the post operation is an operation for finding the focus location of the subject while moving the focus lens toward the direction 303 showing the higher contrast value, which is determined in the preceding operation.

Through the above operations, the moving distance of the focus lens 112 while performing the AF operation (304→303) is reduced, and a waiting time according to the direction switch of the focus lens 112 may be reduced, thereby reducing the time taken to perform the AF operation.

As described above, the DSP 300 performs the preceding operation when it is determined that the user is about to perform the AF operation and performs the post operation when the first shutter-release button input is received from the user to finish the AF operation, and after that, photographs the subject when the second shutter-release button input is received.

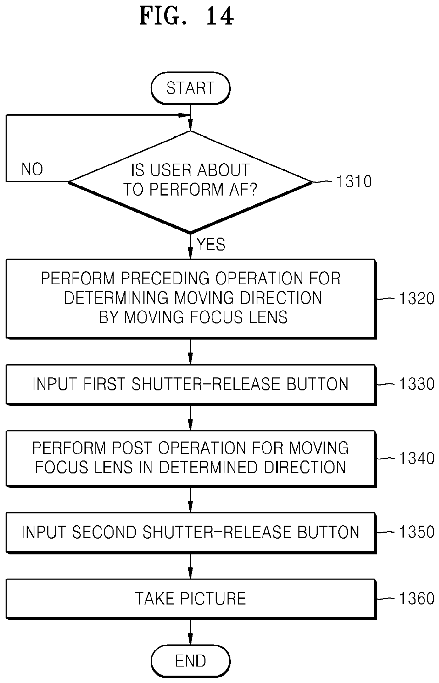

FIG. 14 is a flowchart illustrating a method of controlling a digital photographing apparatus according to an embodiment of the invention.

Referring to FIG. 14, the DSP 300 determines whether the user is about to perform the AF operation (S1310).

According to an embodiment of the invention, the image data deviation calculator 240 calculates deviation of the image data received from a certain detection region 740 for a predetermined time period by analyzing the image data, and outputs the calculated deviation to the determiner 310.

The determiner 310 determines whether the user is about to perform the AF operation by comparing the deviation of the image data with the reference value. Here, the image data may include one of the brightness, the contrast, the RGB data, the color temperature, and the exposure, and "about to perform the AF" means right before the user generates the first shutter-release button input. That is, when the deviation of the image data is less than the reference value, it may be determined that the user is about to perform the AF operation.

According to another embodiment of the invention, the DSP 300 may determine whether the AF operation is about to be performed according to the received vibration degree of the digital camera 1.

Here, the vibration degree may denote the value of the angular velocity (ANGVEL), and the vibration degree may include the vibration degree with respect to the X-axis direction and the vibration degree with respect to the Y-axis direction.

The DSP 300 extracts the maximum angular velocity value and the minimum angular velocity value from among the received vibration degrees, and compares the extracted values with the reference value. That is, when the maximum and the minimum angular velocity values are within the reference value range, it may be determined that the user is about to perform the AF operation. The determination has already been described above, and thus, a detailed description thereof will be omitted here.

According to another embodiment of the invention, after detecting the face of the user or tracing the eyes of the user, if the user views the display unit 420 of the digital photographing apparatus for a predetermined time period or longer, it may be determined that the user is about to perform the AF operation.

According to another embodiment of the invention, it may be determined that the user is about to perform the AF operation when the user contacts the viewfinder.

When it is determined that the user is about to perform the AF operation, the DSP 300 controls the lens driving unit 210 to perform the preceding operation for determining the moving direction by moving the focus lens 112, and the lens driving unit 210 moves the focus lens 112 according to the control signal (S1320).

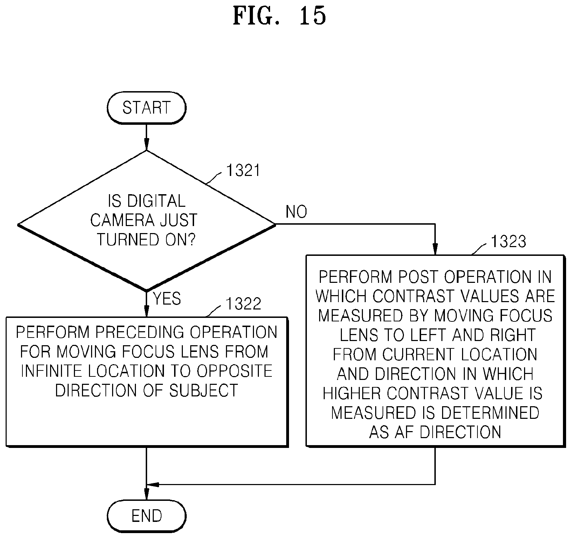

FIG. 15 illustrates a method of performing the preceding operation of the focus lens 112. Referring to FIG. 15, the DSP 300 determines whether the digital camera 1 is just turned on (S1321). The preceding operation of the focus lens 112 in a case where the digital camera 1 is just turned on and in a case where a predetermined time has elapsed since the digital camera 1 is turned on will be described.

If the digital camera 1 is just turned on, the DSP 300 controls the lens driving unit 210 to perform the preceding operation for scanning whether the focus location of the subject exists around the infinite location 301 by moving the focus lens 112 from the infinite location 301 to the over infinite location 302, as shown in FIG. 12A (S1322). While performing the preceding operation, the user hardly recognizes the variation through the display unit 420.

However, if a predetermined time has passed after the digital camera 1 is turned on, the DSP 300 controls the lens driving unit 210 to perform the preceding operation for determining the moving direction showing higher contrast value as the moving direction of the focus lens 112 by moving the focus lens 112 at the arbitrary location 301 in back and forth directions 302 and 304 and receiving the contrast values while moving the focus lens 112, as shown in FIG. 13A (S1323). While performing the preceding operation, the user hardly recognizes the variation through the display unit 420.

Referring back to FIG. 14, after finishing the preceding operation, the DSP 300 receives the first shutter-release button input from the user (S1330).

When receiving the first shutter-release button input, the DSP 300 controls the lens driving unit 210 to perform the post operation for moving the focus lens in the determined direction, and the lens driving unit 210 moves the focus lens 112 according to the control signal (S1340).

If the digital camera 1 is just turned on, the DSP 300 controls the lens driving unit 210 to perform the post operation for finding the focus location of the subject while moving the focus lens 112 from the over infinite focus location 302 opposite to the subject 302 toward the subject location 303 without switching the direction of the focus lens, as shown in FIG. 12B. If a predetermined time has passed after the digital camera 1 is turned on, the DSP 300 controls the lens driving unit 210 to perform the post operation for finding the focus location of the subject while moving the focus lens 112 toward the direction 303 showing the higher contrast value, as shown in FIG. 13B.

After finishing the post operation, that is, after finishing the AF operation, when the DSP 300 receives the second shutter-release button input (S1350), the DSP 300 controls the digital camera 1 to photograph the subject, the AF of which is finished (S1360).

According to the embodiments of the invention, the behavior pattern of the user is recognized through the variation in the angular velocity of the vibration detector and the AF algorithm may be selectively changed, and accordingly, the AF accuracy and the AF speed may be improved. In addition, even in a condition where the hand shake signal may not be determined accurately, for example, the photographing is performed outside or while moving, the time right before the AF operation may be sensed by calculating the image data deviation, detecting the face or eyes of the user, or determining whether the user contacts the viewfinder, and accordingly, the preceding operation may be accurately performed.

As described above, according to the invention, an indication of the time shortly before the pushing of a shutter button may be recognized according to the behavior pattern of the user, and the AF preceding operation is performed at that instant. Therefore, the moving distance and the number of direction switches of the focus lens may be reduced, and thus, the AF operating time (i.e., the AF operating time after the user pushes the shutter) may be reduced.

Also, an indication of the time shortly before the user pushes the shutter may be recognized through the image data deviation, the shaking of the digital photographing apparatus, and the face detection or the eyes detection of the user, and then, the AF algorithm may be selectively changed, thereby obtaining an optimal AF function.

The invention can also be embodied as computer readable codes on a computer readable non-transitory recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the invention can be easily construed by programmers of ordinary skill in the art to which the invention pertains.

While the invention has been particularly shown and described with reference to exemplary embodiments thereof, it will be understood by those of ordinary skill in the art that various changes in form and details may be made therein without departing from the scope of the invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

## Claims

1. A method of controlling a digital photographing apparatus (1), the method **characterised by** comprising:
calculating a deviation of image data received from an image sensor (130) for a predetermined time period, before determining whether a user is about to perform an auto-focus, AF, operation;
determining whether the user of the digital photographing apparatus (1) is about to perform the AF operation by recognizing a behaviour pattern of the user, wherein the determining of whether the AF operation is about to be performed comprises determining whether the AF operation is about to be performed by calculating the deviation of the image data comprising at least one of brightness, contrast, RGB data, colour temperature, and exposure in a designated region of the image sensor (130) per unit time, comparing the calculated deviation with a reference value, and determining the deviation of the image data is equal to or less than the reference value for the predetermined period;
performing a preceding operation of a focus lens (112) if it is determined that the user is about to perform the AF operation, wherein the preceding operation is an operation for moving the focus lens to determine the moving direction of the focus lens during the AF operation; and
performing a post operation of the focus lens (112) when a first shutter-release button input to perform AF operation is received,
wherein when the digital photographing apparatus is turned on and the AF operation is about to be performed, the preceding operation is a scanning operation to search for a location where the subject is focused around the infinite position by moving the focus lens a predetermined distance from an infinite focus location toward an opposite direction of the subject.

2. The method of claim 1, wherein it is determined that the user is about to perform the AF operation when an indication of a time shortly before the first shutter-release button input is received.

3. The method of claim 1 or claim 2, wherein the calculated deviation of the image data is calculated by setting at least one or more detection regions of a certain region of the image sensor and by using image data received for a predetermined time period from the detection regions.

4. The method of any preceding claim, wherein when the digital photographing apparatus is turned on and the deviation of the image data calculated for the predetermined time is equal to or less than the reference value, it is determined that the AF operation is about to be performed.

5. The method of any preceding claim, further comprising detecting a face of the user from an image input through an auxiliary photographing unit of the digital photographing apparatus, before the determining of whether the digital photographing apparatus is about to perform the AF operation, wherein it is determined whether the AF operation is about to be performed based on the detected face.

6. The method of claim 5, wherein it is determined that the AF operation is about to be performed by tracing an orientation of the face detected for a predetermined time period or longer.

7. The method of claim 5, wherein it is determined whether the AF operation is about to be performed by tracing eyes of the detected face and determining a variation in the eyes.

8. The method of any preceding claim, further comprising:
sensing whether the user contacts a viewfinder before the determining of whether the digital photographing apparatus is about to perform the AF operation,
wherein when the user contacts the viewfinder, it is determined that the AF operation is about to be performed.

9. The method of any preceding claim, wherein performing the post operation comprises moving the focus lens from the location of the focus lens in the preceding operation toward the subject.

10. A digital photographing apparatus comprising:
a lens driving unit (210) for moving a focus lens (112);
a digital signal processor, DSP, (300) that is operable to control the lens driving unit (210) to perform a preceding operation of the focus lens (112) when the digital photographing apparatus is about to perform an auto-focus, AF, operation after determining whether the AF operation is about to be performed through recognition of a behaviour pattern of a user, and is operable to control the lens driving unit (210) to perform a post operation for moving the focus lens (112) when a first shutter-release button input to perform AF operation is received; and
a calculation unit for calculating a deviation of image data received from an image sensor for a predetermined time period,
wherein the digital signal processor is operable to determine whether the AF operation is about to be performed by calculating the deviation of the image data comprising at least one of brightness, contrast, RGB data, colour temperature, and exposure in a designated region of the image sensor (130) per unit time, comparing the calculated deviation with a reference value, and determining the deviation of the image data is equal to or less than the reference value for the predetermined time period,
wherein when the digital photographing apparatus is turned on and the AF operation is about to be performed, the preceding operation is a scanning operation to search for a location where the subject is focused around the infinite position by moving the focus lens a predetermined distance from an infinite focus location toward an opposite direction of the subject.

11. The digital photographing apparatus of claim 10, further comprising a face detector for detecting a face of the user from an image input through an auxiliary photographing unit, and it is determined whether the AF operation is about to be performed based on the detected face of the user.

12. The digital photographing apparatus of claim 11, wherein the digital signal processor is operable to determine whether the AF operation is about to be performed by tracing eyes of the detected face and determining a variation in the eyes.

13. The digital photographing apparatus of any one of claims 10 to 12, further comprising:
a sensor for sensing whether the user contacts the viewfinder,
wherein the digital signal processor is operable to determine that the AF operation is about to be performed when the user contacts the viewfinder.

14. The digital photographing apparatus of any one of claims 10 to 13, wherein when the first shutter-release button input is received, the digital signal processor is operable to control the lens driving unit to perform a post operation for moving the focus lens from the location of the preceding operation toward the subject.

15. The digital photographing apparatus of any one of claims 10 to 14, wherein when the digital photographing apparatus is in a turned on state for a predetermined time period and the AF operation is about to be performed, the digital signal processor is operable to control the lens driving unit to perform a preceding operation for moving the focus lens in back and forth directions of a current position to measure contrast values and determining a direction showing higher contrast values between the back and forth directions as a moving direction, and when the first shutter-release button input is received, the digital signal processor is operable to control the lens driving unit to perform a post operation for moving the focus lens in the determined moving direction.

## Patentansprüche

1. Verfahren zum Steuern einer digitalen Fotografiervorrichtung (1), wobei das Verfahren **dadurch gekennzeichnet ist, dass** es umfasst:
Berechnen einer Abweichung von Bilddaten, die von einem Bildsensor (130) empfangen werden, für eine vorbestimmte Zeitdauer, bevor bestimmt wird, ob ein Benutzer im Begriff steht, eine Autofokus, AF, -Operation durchzuführen;
Bestimmen, ob der Benutzer der digitalen Fotografiervorrichtung (1) im Begriff steht, die AF-Operation durchzuführen, indem ein Verhaltensmuster des Benutzers erkannt wird, wobei das Bestimmen, ob die AF-Operation im Begriff steht durchgeführt zu werden, umfasst zu bestimmen, ob die AF-Operation im Begriff steht durchgeführt zu werden, indem die Abweichung der Bilddaten, die wenigstens eines von Helligkeit, Kontrast, RGB-Daten, Farbtemperatur und/oder Belichtung umfassen, in einem bezeichneten Bereich des Bildsensors (130) pro Zeiteinheit berechnet wird, die berechnete Abweichung mit einem Referenzwert verglichen wird und bestimmt wird, ob die Abweichung der Bilddaten gleich dem oder kleiner als der Referenzwert für die vorbestimmte Zeitdauer ist;
Durchführen einer vorhergehenden Operation einer Sammellinse (112), falls bestimmt wird, dass der Benutzer im Begriff steht, die AF-Operation durchzuführen, wobei die vorhergehende Operation eine Operation zum Bewegen der Sammellinse ist, um die Bewegungsrichtung der Sammellinse während der AF-Operation zu bestimmen; und
Durchführen einer nachfolgenden Operation der Sammellinse (112), wenn eine erste Eingabe über die Auslösertaste zum Durchführen der AF-Operation empfangen wird,
wobei, wenn die digitale Fotografiervorrichtung eingeschaltet wird und die AF-Operation im Begriff steht, durchgeführt zu werden, die vorhergehende Operation eine Abtastoperation ist, um nach einer Position zu suchen, an der das Motiv rund um die unendliche Position fokussiert ist, indem die Sammellinse um eine vorbestimmte Distanz von einer unendlichen Fokusposition in eine dem Motiv entgegengesetzte Richtung bewegt wird.

2. Verfahren nach Anspruch 1, wobei bestimmt wird, dass der Benutzer im Begriff steht, die AF-Operation durchzuführen, wenn eine Anzeige einer Zeit kurz vor der ersten Eingabe über die Auslösertaste empfangen wird.

3. Verfahren nach Anspruch 1 oder Anspruch 2, wobei die berechnete Abweichung der Bilddaten berechnet wird, indem wenigstens ein oder mehrere Detektionsbereiche eines bestimmten Bereichs des Bildsensors eingestellt werden und indem empfangene Bilddaten für eine vorbestimmte Zeitdauer von den Detektionsbereichen empfangen werden.

4. Verfahren nach einem der vorstehenden Ansprüche, wobei, wenn die digitale Fotografiervorrichtung eingeschaltet wird und die berechnete Abweichung der Bilddaten für die vorbestimmte Zeitdauer kleiner als oder gleich dem Referenzwert ist, bestimmt wird, dass die AF-Operation im Begriff steht durchgeführt zu werden.

5. Verfahren nach einem der vorstehenden Ansprüche, ferner umfassend, das Gesicht eines Benutzers in einem Bild zu erkennen, das über eine Zusatz-Fotografiereinheit der digitalen Fotografiervorrichtung eingegeben wird, bevor bestimmt wird, ob die digitale Fotografiervorrichtung im Begriff steht, die AF-Operation durchzuführen, wobei basierend auf dem erkannten Gesicht bestimmt wird, ob die AF-Operation im Begriff steht durchgeführt zu werden.

6. Verfahren nach Anspruch 5, wobei bestimmt wird, dass die AF-Operation im Begriff steht durchgeführt zu werden, indem eine Ausrichtung des erkannten Gesichts für eine vorbestimmte Zeitdauer oder länger nachverfolgt wird.

7. Verfahren nach Anspruch 5, wobei bestimmt wird, ob die AF-Operation im Begriff steht durchgeführt zu werden, indem die Augen des erkannten Gesichts nachverfolgt werden und eine Veränderung an den Augen bestimmt wird.

8. Verfahren nach einem der vorstehenden Ansprüche, ferner umfassend:
Erfassen, ob der Benutzer einen Sucher berührt, bevor bestimmt wird, ob die digitale Fotografiervorrichtung im Begriff steht, die AF-Operation durchzuführen, wobei, wenn der Benutzer den Sucher berührt, bestimmt wird, dass die AF-Operation im Begriff steht durchgeführt zu werden.

9. Verfahren nach einem der vorstehenden Ansprüche, wobei das Durchführen der nachfolgenden Operation umfasst, die Sammellinse aus der Position der Sammellinse in der vorhergehenden Operation zum Motiv hin zu bewegen.

10. Digitale Fotografiervorrichtung, umfassend:
eine Linsenantriebseinheit (210) zum Bewegen einer Sammellinse (112);
einen Digitalsignalprozessor, DSP, (300), der dazu betreibbar ist, die Linsenantriebseinheit (210) zu steuern, um eine vorhergehende Operation der Sammellinse (112) durchzuführen, wenn die digitale Fotografiervorrichtung im Begriff steht, eine Autofokus, AF, -Operation durchzuführen, nachdem bestimmt ist, ob die AF-Operation im Begriff steht durchgeführt zu werden, durch Erkennen eines Verhaltensmusters eines Benutzers, und dazu betreibbar ist, die Linsenantriebseinheit (210) zu steuern, um eine nachfolgende Operation zum Bewegen der Sammellinse (112) durchzuführen, wenn eine erste Eingabe über die Auslösertaste zum Durchführen der AF-Operation empfangen wird; und
eine Berechnungseinheit zum Berechnen einer Abweichung der von einem Bildsensor empfangenen Bilddaten für eine vorbestimmte Zeitdauer,
wobei der Digitalsignalprozessor dazu betreibbar ist zu bestimmen, ob die AF-Operation im Begriff steht durchgeführt zu werden, indem die Abweichung der Bilddaten, die wenigstens eines von Helligkeit, Kontrast, RGB-Daten, Farbtemperatur und/oder Belichtung umfassen, in einem bezeichneten Bereich des Bildsensors (130) pro Zeiteinheit berechnet wird,
die berechnete Abweichung mit einem Referenzwert verglichen wird und bestimmt wird, ob die Abweichung der Bilddaten gleich dem oder kleiner als der Referenzwert für die vorbestimmte Zeitdauer ist, wobei, wenn die digitale Fotografiervorrichtung eingeschaltet wird und die AF-Operation im Begriff steht, durchgeführt zu werden, die vorhergehende Operation eine Abtastoperation ist, um nach einer Position zu suchen, an der das Motiv rund um die unendliche Position fokussiert ist, indem die Sammellinse um eine vorbestimmte Distanz von der unendlichen Fokusposition in eine dem Motiv entgegengesetzte Richtung bewegt wird.

11. Digitale Fotografiervorrichtung nach Anspruch 10, ferner einen Gesichtsdetektor umfassend, um das Gesicht eines Benutzers in einem Bild zu erkennen, das über eine Zusatz-Fotografiereinheit der digitalen Fotografiervorrichtung eingegeben wird, und dass basierend auf dem erkannten Gesicht bestimmt wird, ob die AF-Operation im Begriff steht durchgeführt zu werden.

12. Digitale Fotografiervorrichtung nach Anspruch 11, wobei der Digitalsignalprozessor dazu betreibbar ist zu bestimmen, ob die AF-Operation im Begriff steht durchgeführt zu werden, indem die Augen des erkannten Gesichts nachverfolgt werden und eine Veränderung an den Augen bestimmt wird.

13. Digitale Fotografiervorrichtung nach einem der Ansprüche 10 bis 12, ferner umfassend:
einen Sensor zum Erfassen, ob der Benutzer den Sucher berührt,
wobei der Digitalsignalprozessor dazu betreibbar zu bestimmen, dass die AF-Operation im Begriff steht durchgeführt zu werden, wenn der Benutzer den Sucher berührt.

14. Digitale Fotografiervorrichtung nach einem der Ansprüche 10 bis 13, wobei, wenn eine erste Eingabe über die Auslösertaste empfangen wird, der Digitalsignalprozessor dazu betreibbar ist, die Linsenantriebseinheit zu steuern, um eine nachfolgende Operation zum Bewegen der Sammellinse aus der Position der vorhergehenden Operation zum Motiv hin durchzuführen.

15. Digitale Fotografiervorrichtung nach einem der Ansprüche 10 bis 14, wobei, wenn sich die digitale Fotografiervorrichtung für eine vorbestimmte Zeitdauer im eingeschalteten Zustand befindet und die AF-Operation im Begriff steht durchgeführt zu werden, der Digitalsignalprozessor dazu betreibbar ist, die Linsenantriebseinheit zu steuern, um eine vorhergehende Operation zum Bewegen der Sammellinse in Rückwärts- und in Vorwärtsrichtung von einer aktuellen Position zu steuern, um Kontrastwerte zu messen und eine Richtung zwischen der Rückwärts- und der Vorwärtsrichtung, die höhere Kontrastwerte aufweist, als Bewegungsrichtung zu bestimmen, und wenn die erste Eingabe über die Auslösertaste empfangen wird, ist der Digitalsignalprozessor dazu betreibbar, die Linsenantriebseinheit zu steuern, um eine nachfolgende Operation zum Bewegen der Sammellinse in der bestimmten Bewegungsrichtung durchzuführen.

## Revendications

1. Procédé de commande d'un appareil photographique numérique (1), le procédé étant **caractérisé en ce qu'**il consiste à :
calculer un écart de données d'images reçues d'un capteur d'images (130) pendant une période temporelle prédéfinie, avant de déterminer si un utilisateur est sur le point de réaliser une opération de mise au point automatique, AF ;
déterminer si l'utilisateur de l'appareil photographique numérique (1) est sur le point de réaliser l'opération AF en reconnaissant un modèle comportemental de l'utilisateur, la détermination de si l'opération AF est sur le point d'être réalisée consistant à déterminer si l'opération AF est sur le point d'être réalisée en calculant l'écart des données d'images comprenant la luminosité et/ou le contraste et/ou des données RVB et/ou la température de couleur et/ou l'exposition dans une région désignée du capteur d'images (130) par unité de temps, en comparant l'écart calculé avec une valeur de référence, et en déterminant que l'écart des données d'images est égal ou inférieur à la valeur de référence pour la période prédéfinie ;
réaliser une opération précédente d'une lentille de mise au point (112) s'il est déterminé que l'utilisateur est sur le point de réaliser l'opération AF, l'opération précédente étant une opération permettant de déplacer la lentille de mise au point afin de déterminer la direction de déplacement de la lentille de mise au point pendant l'opération AF ; et
réaliser une opération ultérieure de la lentille de mise au point (112) lorsqu'une première entrée de bouton de libération d'obturateur pour réaliser l'opération AF est reçue,
dans lequel, lorsque l'appareil photographique numérique est allumé et que l'opération AF est sur le point d'être réalisée, l'opération précédente est une opération de balayage afin de chercher un emplacement où le sujet est mis au point autour de la position infinie en déplaçant la lentille de mise au point sur une distance prédéfinie depuis un emplacement focal infini vers une direction opposée du sujet.

2. Procédé selon la revendication 1, dans lequel il est déterminé que l'utilisateur est sur le point de réaliser l'opération AF lorsqu'une indication d'un temps juste avant la première entrée de bouton de libération d'obturateur est reçue.

3. Procédé selon la revendication 1 ou la revendication 2, dans lequel l'écart calculé des données d'images est calculé en définissant au moins une ou plusieurs régions de détection d'une certaine région du capteur d'images et en utilisant les données d'images reçues pendant une période prédéfinie en provenance des régions de détection.

4. Procédé selon l'une quelconque des revendications précédentes, dans lequel lorsque l'appareil photographique numérique est allumé et que l'écart des données d'images calculé pour le temps prédéfini est égal ou inférieur à la valeur de référence, il est déterminé que l'opération AF est sur le point d'être réalisée.

5. Procédé selon l'une quelconque des revendications précédentes, consistant en outre à détecter un visage de l'utilisateur à partir d'une image entrée par l'intermédiaire d'une unité photographique auxiliaire de l'appareil photographique numérique, avant de déterminer si l'appareil photographique numérique est sur le point de réaliser l'opération AF, dans lequel il est déterminé si l'opération AF est sur le point d'être réalisée sur la base du visage détecté.

6. Procédé selon la revendication 5, dans lequel il est déterminé que l'opération AF est sur le point d'être réalisée en suivant une orientation du visage détecté pendant une période prédéfinie ou plus longtemps.

7. Procédé selon la revendication 5, dans lequel il est déterminé si l'opération AF est sur le point d'être réalisée en suivant les yeux du visage détecté et en déterminant une variation dans les yeux.

8. Procédé selon l'une quelconque des revendications précédentes, consistant en outre à :
détecter si l'utilisateur entre en contact avec un viseur avant de déterminer si l'appareil photographique numérique est sur le point de réaliser l'opération AF, dans lequel lorsque l'utilisateur entre en contact avec le viseur, il est déterminé que l'opération AF est sur le point d'être réalisée.

9. Procédé selon l'une quelconque des revendications précédentes, dans lequel la réalisation de l'opération suivante consiste à déplacer la lentille de mise au point depuis l'emplacement de la lentille de mise au point dans l'opération précédente vers le sujet.

10. Appareil photographique numérique comprenant :
une unité d'entraînement (210) de lentille permettant de déplacer une lentille de mise au point (112) ;
un processeur de signaux numériques, DSP, (300) qui est utilisable pour commander l'unité d'entraînement (210) de lentille afin de réaliser une opération précédente de la lentille de mise au point (112) lorsque l'appareil photographique numérique est sur le point de réaliser une opération de mise au point automatique, AF, après avoir déterminé si l'opération AF était sur le point d'être réalisée au moyen de la reconnaissance d'un modèle comportemental d'un utilisateur, et qui est utilisable pour commander l'unité d'entraînement (210) de lentille afin de réaliser une opération ultérieure permettant de déplacer la lentille de mise au point (112) lorsqu'une première entrée de bouton de libération d'obturateur pour réaliser l'opération AF est reçue ; et
une unité de calcul permettant de calculer un écart de données d'images reçues d'un capteur d'images pendant une période temporelle prédéfinie,
dans lequel le processeur de signaux numériques est utilisable pour déterminer si l'opération AF est sur le point d'être réalisée en calculant l'écart des données d'images comprenant la luminosité et/ou le contraste et/ou des données RVB et/ou la température de couleur et/ou l'exposition dans une région désignée du capteur d'images (130) par unité de temps, en comparant l'écart calculé avec une valeur de référence, et en déterminant que l'écart des données d'images est égal ou inférieur à la valeur de référence pour la période prédéfinie,
dans lequel, lorsque l'appareil photographique numérique est allumé et que l'opération AF est sur le point d'être réalisée, l'opération précédente est une opération de balayage afin de chercher un emplacement où le sujet est mis au point autour de la position infinie en déplaçant la lentille de mise au point sur une distance prédéfinie depuis un emplacement focal infini vers une direction opposée du sujet.

11. Appareil photographique numérique selon la revendication 10, comportant en outre un détecteur de visage permettant de détecter le visage de l'utilisateur à partir d'une entrée d'images au moyen d'une unité photographique auxiliaire, et il est déterminé si l'opération AF est sur le point d'être réalisée sur la base du visage détecté de l'utilisateur.

12. Appareil photographique numérique selon la revendication 11, dans lequel le processeur de signaux numériques est utilisable pour déterminer si l'opération AF est sur le point d'être réalisée en suivant les yeux du visage détecté et en déterminant une variation dans les yeux.

13. Appareil photographique numérique selon l'une quelconque des revendications 10 à 12, comprenant en outre :
un capteur permettant de détecter que l'utilisateur entre en contact avec le viseur,
dans lequel le processeur de signaux numériques est utilisable pour déterminer que l'opération AF est sur le point d'être réalisée lorsque l'utilisateur entre en contact avec le viseur.

14. Appareil photographique numérique selon l'une quelconque des revendications 10 à 13, dans lequel lorsque la première entrée de bouton de libération d'obturateur est reçue, le processeur de signaux numériques est utilisable pour commander l'unité d'entraînement de lentille pour réaliser une opération ultérieure permettant de déplacer la lentille de mise au point depuis l'emplacement de l'opération précédente vers le sujet.

15. Appareil photographique numérique selon l'une quelconque des revendications 10 à 14, dans lequel lorsque l'appareil photographique numérique est dans un état allumé pendant une durée prédéfinie et que l'opération AF est sur le point d'être réalisée, le processeur de signaux numériques est utilisable pour commander l'unité d'entraînement de lentille pour qu'elle réalise une opération précédente permettant de déplacer la lentille de mise au point dans des directions vers l'arrière et vers l'avant d'une position actuelle afin de mesurer des valeurs de contraste et de déterminer une direction montrant des valeurs de contraste supérieures entre les directions arrière et avant en tant que direction de déplacement, et lorsque la première entrée de bouton de libération d'obturateur est reçue, le processeur de signaux numériques est utilisable pour commander l'unité d'entraînement de lentille pour qu'elle réalise une opération ultérieure permettant de déplacer la lentille de mise au point dans la direction de déplacement déterminée.
